# EUROPEAN PATENT APPLICATION

(11) **EP 4 502 912 A1**
(43) Date of publication of application: **05.02.2025**
(21) Application number: 22935118.4
(22) Date of filing: 29.03.2022
(51) Int. Cl.: G06Q 50/06, G06Q 30/02, G06Q 50/10

(54) **ENVIRONMENT LOAD EVALUATION DEVICE, ENVIRONMENT LOAD EVALUATION METHOD, AND PROGRAM**

(71) Applicant: HONDA MOTOR CO., LTD., Minato-ku Tokyo 107-8556 (JP)
(72) Inventor: YAMAMOTO, Seiichi, Tokyo 107-8556 (JP); YASUDA, Naoya, Tokyo 107-8556 (JP); INOUE, Masahito, Tokyo 107-8556 (JP)
(74) Representative: Weickmann & Weickmann PartmbB
(86) International application number: PCT/JP2022/015366
(87) International publication number: WO 2023/187966

(57) **Abstract**

A device for evaluating an environment load related to usage of batteries for a battery sharing system for managing a plurality of the batteries replaceable via a battery replacement station so that the batteries can be shared among a plurality of users includes an aggregation target extractor that extracts a target user group consisting of two or more users as aggregation targets from among users capable of using the battery replacement station, a usage amount calculator that calculates a total usage amount of the battery used by the target user group during a predetermined period, based on a usage history of the battery of the target user group, and an evaluator that evaluates an environment load related to the usage of the battery based on the total usage amount.

## Description

### [Technical Field]

The present invention relates to an environment load evaluation device, an environment load evaluation method, and a program.

### [Background Art]

In the related art, a CO2 reduction amount is calculated based on a usage amount (traveling distance, charge/discharge amount, or like) of electric vehicle (EV), and eco points of an amount according to the amount of reduction is assigned to a user of the EV with the purpose of promoting reduction in a CO2 emission amount (see Patent Documents 1 and 2, for example).

### [Citation List]

### [Patent Document]

[Patent Document 1]
   Patent No. 4432156
[Patent Document 2]
   Patent No. 4466726

### [Summary of Invention]

### [Technical Problem]

However, in the related art, a degree of contribution of a specific user to CO2 reduction is evaluated. Therefore, in the related art, there is a likelihood that a degree of contribution to CO2 reduction of a user of a battery sharing service in which batteries are shared among a plurality of users (including companies) cannot be evaluated.

The present invention has been made in consideration of such circumstances, and an object of the present invention is to provide an environment load evaluation device, environment load evaluation method, and program capable of appropriately evaluating a degree of contribution to CO2 reduction of a user of a battery sharing service in which batteries are shared among a plurality of users.

### [Solution to Problem]

The environment load evaluation device, environment load evaluation method, and program according to the present invention employ the following configuration.
(1): An environment load evaluation device according to an aspect of the present invention is a device for evaluating an environment load related to usage of batteries for a battery sharing system for managing a plurality of the batteries replaceable via a battery replacement station so that the batteries can be shared among a plurality of users, the environment load evaluation device including: an aggregation target extractor configured to extract a target user group consisting of two or more users as aggregation targets from among users capable of using the battery replacement station; a usage amount calculator configured to calculate a total usage amount of the battery used by the target user group during a predetermined period, based on a usage history of the battery of the target user group; and an evaluator configured to evaluate an environment load related to the usage of the battery based on the total usage amount.
(2): In the aspect (1), the evaluator acquires a first emission amount, the first emission amount being an amount of CO2 emitted when the total amount of used electrical power is generated using fossil fuel, as an evaluation value of the environment load.
(3): In the aspect (2), the evaluator calculates a second emission amount, the second emission amount being an amount of CO2 emitted when equipment driven by the battery is driven by an internal combustion engine and acquires a difference between the first emission amount and the second emission amount as the evaluation value of the environment load.
(4): In the aspect (3), the evaluator recognizes a type of equipment driven using the battery by the target user group and calculates an amount of CO2 emitted when the equipment is driven by an internal combustion engine according to the type as the second emission amount.
(5): In any one of aspects (1) to (4), the evaluator evaluates the environment load for each target user group and displays evaluation results of a plurality of the target user groups so that evaluation results can be compared.
(6): In the aspect (5), the evaluator recognizes a type of equipment driven using the battery by the target user group and performs evaluation of the environment load for a target user group having the same type of equipment.
(7): In any one of aspects (1) to (6), the evaluator provides a result of the evaluation of the environment load performed for each target user group to an administrator of the target user group, and the environment load evaluation device further includes a consideration calculator configured to calculate a consideration to be received from the administrator of the target user group with respect to provision of the evaluation result or depending on the content of the evaluation result.
(8): In the aspect (7), the equipment driven using the battery by the user is an electric vehicle using a motor as a power source, and the consideration calculator calculates the consideration using a unit traveling distance of the electric vehicle or a unit emission amount of CO2 that the electric vehicle can reduce compared to a vehicle driven by an internal combustion engine as a calculation unit.
(9): In any one of aspects (1) to (8), further including: an authentication acquisition supporter configured to acquire a degree of progress of a process related to acquisition of the authentication by accessing a predetermined database for acquisition of authentication related to the reduction of the environment load, wherein the consideration calculator calculates the consideration according to the degree of progress of the process related to acquisition of the authentication.
(10): An environment load evaluation method according to an aspect of the present invention is a method for evaluating, by a computer, an environment load related to usage of batteries for a battery sharing system for managing a plurality of the batteries replaceable via a battery replacement station so that the batteries can be shared among a plurality of users, the environment load evaluation method including: extracting a target user group consisting of two or more users as aggregation targets from among users capable of using the battery replacement station; calculating a total usage amount of the battery used by the target user group during a predetermined period, based on a usage history of the battery of the target user group; and evaluating an environment load related to the usage of the battery based on the total usage amount.
(11): A program according to an aspect of the present invention is a program for causing a computer for evaluating an environment load related to usage of batteries for a battery sharing system for managing a plurality of the batteries replaceable via a battery replacement station so that the batteries can be shared among a plurality of users, to extract a target user group consisting of two or more users as aggregation targets from among users capable of using the battery replacement station; calculate a total usage amount of the battery used by the target user group during a predetermined period, based on a usage history of the battery of the target user group; and evaluate an environment load related to the usage of the battery based on the total usage amount.
(12): An environment load evaluation device according to an aspect of the present invention is a device for evaluating an environment load related to usage of batteries for a battery sharing system for managing a plurality of the batteries replaceable via a battery replacement station so that the batteries can be shared among a plurality of users, the environment load evaluation device including: an aggregation target extractor configured to extract one or more target users as aggregation targets from among users capable of using the battery replacement station; a usage amount calculator configured to calculate a usage amount of the battery used by the target user during a predetermined period, based on a usage history of the battery of the target user; and an evaluator configured to evaluate an environment load related to the usage of the battery based on the usage amount.

### [Advantageous Effects of Invention]

According to the aspects (1) to (11), a method for evaluating the environment load related to the usage of batteries for the battery sharing system for managing the plurality of the batteries replaceable via the battery replacement station so that the batteries can be shared among a plurality of users includes extracting a target user group consisting of two or more users as aggregation targets from among users capable of using the battery replacement station; calculating a total usage amount of the battery used by the target user group during a predetermined period, based on a usage history of the battery of the target user group; and evaluating an environment load related to the usage of the battery based on the total usage amount, thereby appropriately evaluating the degree of contribution to the CO2 reduction for the user group of the battery sharing service in which the batteries are shared among the plurality of users.

Further, according to aspect (12), a method for evaluating the environment load related to the usage of batteries for the battery sharing system for managing the plurality of the batteries replaceable via the battery replacement station so that the batteries can be shared among a plurality of users includes: extracting one or more target users as aggregation targets from among users capable of using the battery replacement station; calculating a total usage amount of the battery used by the target user during a predetermined period, based on a usage history of the battery of the target user; and evaluating an environment load related to the usage of the battery based on the total usage amount, thereby appropriately evaluating the degree of contribution to the CO2 reduction for each user of the battery sharing service in which the batteries are shared among the plurality of users.

### [Brief Description of Drawings]

FIG. 1 is a diagram illustrating an example of a battery sharing service system according to an embodiment.
FIG. 2 is a diagram illustrating an example of a configuration of an electric vehicle according to an embodiment.
FIG. 3 is a diagram illustrating an example of a configuration of a removable battery according to an embodiment.
FIG. 4 is a block diagram illustrating a system configuration of a battery replacement station.
FIG. 5 is a block diagram illustrating a system configuration of a management server device.
FIG. 6 is a block diagram illustrating a system configuration of an environment load evaluation service providing device.
FIG. 7 is a diagram illustrating an example of usage history information and user management information.
FIG. 8 is a flowchart showing an example of a flow of processing in which the environment load evaluation service providing device evaluates a degree of contribution of a target user group to reduction in a CO2 emission amount.
FIG. 9 is a flowchart illustrating an example of a flow of processing in which the environment load evaluation service providing device determines a service consideration for the target user group.
FIG. 10 is a diagram illustrating a first display example for the degree of contribution (or an evaluation result thereof) of the target user group to the reduction in the CO2 emission amount.
FIG. 11 is a diagram illustrating a second display example for the degree of contribution (or the evaluation result thereof) of the target user group to the reduction in the CO2 emission amount.

### [Description of Embodiments]

Hereinafter, embodiments of an environment load evaluation device, an environment load evaluation method, and a program of the present invention will be described with reference to the drawings.

In the following description, a case in which the environment load evaluation device of the embodiment is applied to a battery sharing service system in which batteries (hereinafter referred to as "detachable batteries") which are power storage devices that are detachably mounted on an electric vehicle are shared will be described. The environment load evaluation device of the embodiment may be applied to a management server device that manages a battery replacement station that receives removable batteries and supplies (provides) removable batteries for replacement in the battery sharing service system. Further, part or all of the environment load evaluation device of the embodiments may be provided as part of a battery replacement station instead of the management server device.

In the following description, electric vehicles may include a variety of vehicles that travel using electrical power from removable batteries, such as saddle-type electric vehicles (hereinafter referred to as "electric two-wheeled vehicles") or four-wheeled electric vehicles (hereinafter referred to as "electric vehicles"). For example, the electric vehicles include all of vehicle type mobile objects that travel using electric motors driven by electrical power supplied from removable batteries, such as not only two-wheeled or four-wheeled vehicles, but also three-wheeled vehicles (including vehicles with one front wheel and two rear wheels, as well as vehicles with two front wheels and one rear wheel), assisted bicycles, and like. However, mobile objects to which the environment load evaluation device of the embodiment can be applied may be mobile objects such as mobile robots, autonomous mobile devices, autonomous vehicles, other electric vehicles, drone flying objects, and other electric mobile devices (electric mobility) instead of these vehicle-type mobile objects.

### [1. Overall configuration]

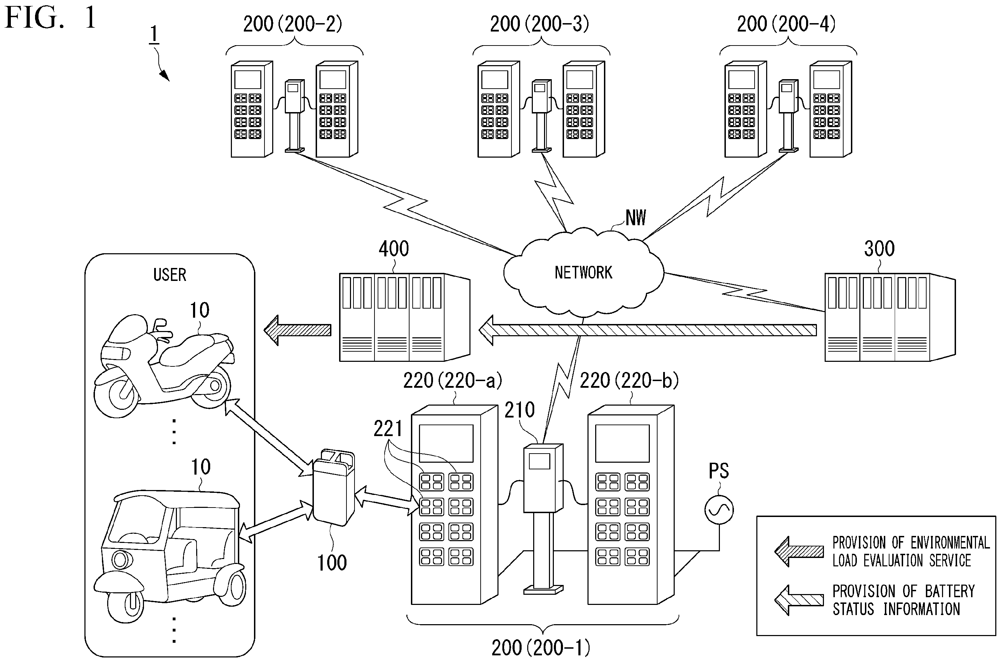

FIG. 1 is a diagram illustrating an example of a battery sharing service system 1 according to an embodiment. The battery sharing service system 1 includes one or more (for example, a plurality of) battery replacement stations 200 (four battery replacement stations 200-1 to 200-4 are shown in FIG. 1), a management server device 300, and an environment load evaluation device 400.

The battery replacement station 200 includes, for example, a station control device 210, and one or more battery replacement devices 220 (two battery replacement devices 220-a and 220-b are shown in FIG. 1). The station control device 210 and the battery replacement device 220 can perform communication by a cable or wirelessly. The station control device 210 and the battery replacement device 220 may be integrally configured as one device instead of being separate devices.

The station control device 210 manages the charging and discharging of the removable battery 100 in the battery replacement device 220, and reception and provision of the removable battery 100 (hereinafter referred to as "replacement of the removable battery 100"). The station control device 210 provides information for replacement of the removable battery 100 to the user of the electric vehicle 10 when the user uses the battery replacement station 200. For example, the station control device 210 provides information indicating the battery slot 221 that receives the removable battery 100 having a low remaining capacity due to usage in the electric vehicle 10, information indicating the battery slot 221 in which another removable battery 100 to be provided in place of the received removable battery 100 is accommodated, or the like to the user.

The battery replacement device 220 is a device that performs charging/discharging and replacement of the removable battery 100. The battery replacement device 220 has one or more (for example, a plurality of) battery slots 221. The battery slot 221 is an accommodation portion that can accommodate the removable battery 100 and charge and discharge the removable battery 100. In the example shown in FIG. 1, one battery replacement device 220 includes eight battery slots 221 and can accommodate eight removable batteries 100 at the same time. The battery replacement device 220 can simultaneously charge a plurality of removable batteries 100 (in the example shown in FIG. 1, a maximum of eight removable batteries 100) accommodated in a plurality of battery slots 221. In the present specification, "simultaneously charge" or "simultaneous charging" is not limited to a case where charging of the plurality of removable batteries 100 starts simultaneously, and includes, for example, a case where part of a charging time of a certain removable battery 100 and part of a charging time of another removable battery 100 are simultaneous.

Electrical power from an external power supply PS is supplied to the battery replacement device 220. The external power supply PS is, for example, a commercial power supply for 100 V AC. The battery replacement device 220 charges the removable battery 100 received from the user of the electric vehicle 10 under the control of the station control device 210. When the charging of the removable battery 100 is completed, the battery replacement device 220 transmits a notification indicating that charging is completed to the station control device 210. Thereby, the station control device 210 recognizes the removable battery 100 that can be provided to the user of the electric vehicle 10. The battery replacement device 220 may discharge electrical power remaining in the removable battery 100. Details of the battery replacement station 200 will be described later.

The management server device 300 is connected to a network NW. The network NW includes, for example, one or more of the Internet, a cellular network, a Wi-Fi network, a wide area network (WAN), a local area network (LAN), and the like. In the present embodiment, the management server device 300 communicates with the plurality of battery replacement stations 200 via the network NW and manages the plurality of battery replacement stations 200. For example, the management server device 300 receives information indicating the status of the battery replacement station 200 (hereinafter referred to as "status information") from each battery replacement station 200 and determines the status of each battery replacement station 200 based on the status information.

The management server device 300 communicates with a terminal device T1 used by an administrator P1 who manages the battery sharing service system 1 directly or via the network NW, and outputs a predetermined notification regarding the status of the battery replacement station 200 to the terminal device T1. The terminal device T1 is a stationary or notebook personal computer.

The management server device 300 performs communication with a terminal device T2 used by a security personnel P2 in charge of maintaining the battery replacement station via the network NW, and outputs a predetermined notification regarding the status of the battery replacement station 200 to the terminal device T2. The terminal device T2 is, for example, a portable terminal device, and is a smartphone, a tablet terminal, or the like. Details of the management server device 300 will be described later.

The environment load evaluation device 400 is a device that provides an environment load evaluation service to a user of the battery sharing service. The environment load evaluation service in the present embodiment is a service for evaluating a degree of contribution to environment load reduction of the user. Specifically, the environment load evaluation service is a service for calculating the amount of reduction in CO2 emission as an evaluation value and providing various types of information to the user based on the evaluation value. According to such an environment load evaluation service, the user can quantitatively ascertain a degree of contribution of the user to the reduction in the CO2 emission amount.

In recent years, interest in sustainable development goals (SDGs) has been increasing, and usage of the electric vehicle 10 driven by the removable battery 100 instead of a vehicle driven by an internal combustion engine is being promoted in order to reduce the CO2 emission amount. With this social background, users have a need to accurately recognize their own achievements regarding efforts to reduce an environment load, and to improve their own social image through appealing to the outside. With such a need as a background, the environment load evaluation device 400 provides an environment load evaluation service to users based on various pieces of data of the battery sharing service.

More specifically, the environment load evaluation device 400 acquires information regarding the removable battery 100 (battery information) used by the user from the management server device 300 and calculates the amount of reduction in CO2 emission based on the acquired battery information. In the present embodiment, a provider such as a taxi company or a transport company that mainly operate using electric vehicles 10 is assumed as the user of such an environment load evaluation service, but the user does not necessarily have to be such a provider. For example, the user may be a person (individual or provider) who rents and uses the electric vehicle 10 from the provider or may be an individual who owns one or more electric vehicles 10.

### [2. Configuration of electric vehicle]

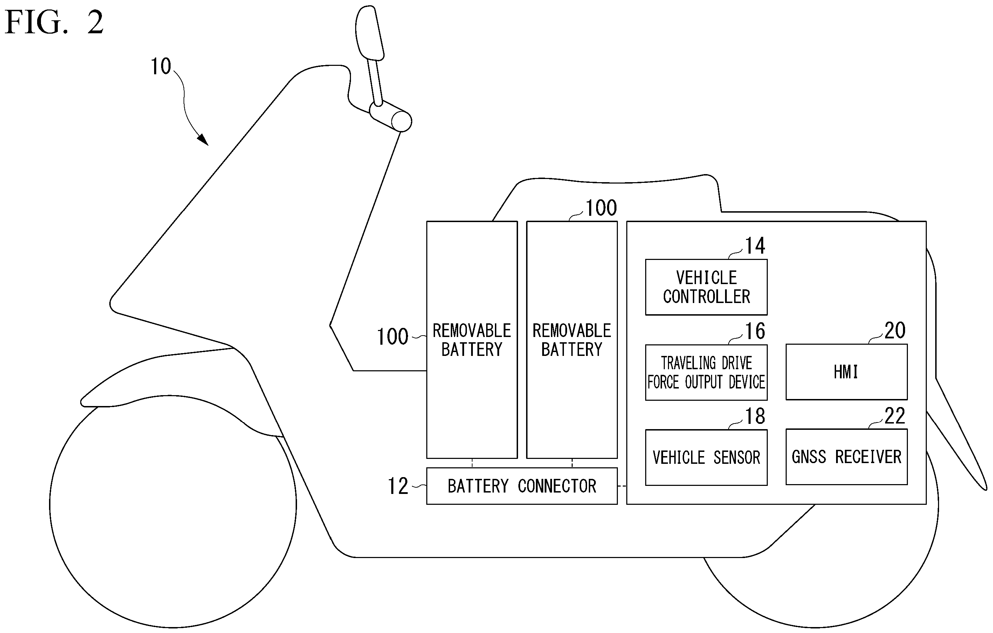

FIG. 2 is a diagram illustrating an example of a configuration of the electric vehicle 10 of the embodiment. The electric vehicle 10 travels using a drive force of an electric motor that is driven by electrical power supplied from the removable battery 100. However, the electric vehicle 10 may be a hybrid electric vehicle that travels using a drive force that is a combination of the removable battery 100 and an internal combustion engine such as a diesel engine or a gasoline engine. The electric vehicle 10 includes, for example, a battery connector 12, a vehicle controller 14, a traveling drive force output device 16, a vehicle sensor 18, a human machine interface (HMI) 20, and a global navigation satellite system (GNSS) receiver 22.

The battery connector 12 is electrically connected to the removable battery 100 when the removable battery 100 is mounted on the electric vehicle 10. The battery connector 12 includes an electrical power line connection terminal that receives electrical power supply from the removable battery 100, a communication line connection terminal that performs data communication between the removable battery 100 and the vehicle controller 14, and the like.

The vehicle controller 14 acquires a measurement result from the vehicle sensor 18, acquires a value (State of Charge: SOC) indicating a state of charge of the power storage 120 from a battery management unit (BMU) 110 included in the removable battery 100, and acquires the position of the electric vehicle 10 from the GNSS receiver 22. The vehicle controller 14 controls the traveling drive force output device 16 based on the acquired data. The vehicle controller 14 may transmit position information of the electric vehicle 10 acquired from the GNSS receiver 22 to the removable battery 100 via the battery connector 12.

The traveling drive force output device 16 includes, for example, an electric motor, an inverter, and an electronic control unit (ECU) that controls the inverter. The ECU, for example, controls electrical power that is supplied to the electric motor from the removable battery 100 by controlling the inverter. The vehicle sensor 18 includes a speed sensor, an acceleration sensor, a rotational speed sensor, an odometer, and various other sensors mounted on the electric vehicle 10. The vehicle sensor 18 outputs the measurement result to the vehicle controller 14.

The HMI 20 outputs various types of information to the user of the electric vehicle 10, and also receives input operations from the user. The HMI 20 includes, for example, various display devices such as a head up display (HUD) and a meter display (which may be a touch panel), speakers, and the like. The GNSS receiver 22 measures the position of the electric vehicle 10 based on radio waves arriving from a GNSS satellite such as a GPS satellite, for example.

### [3. Removable battery]

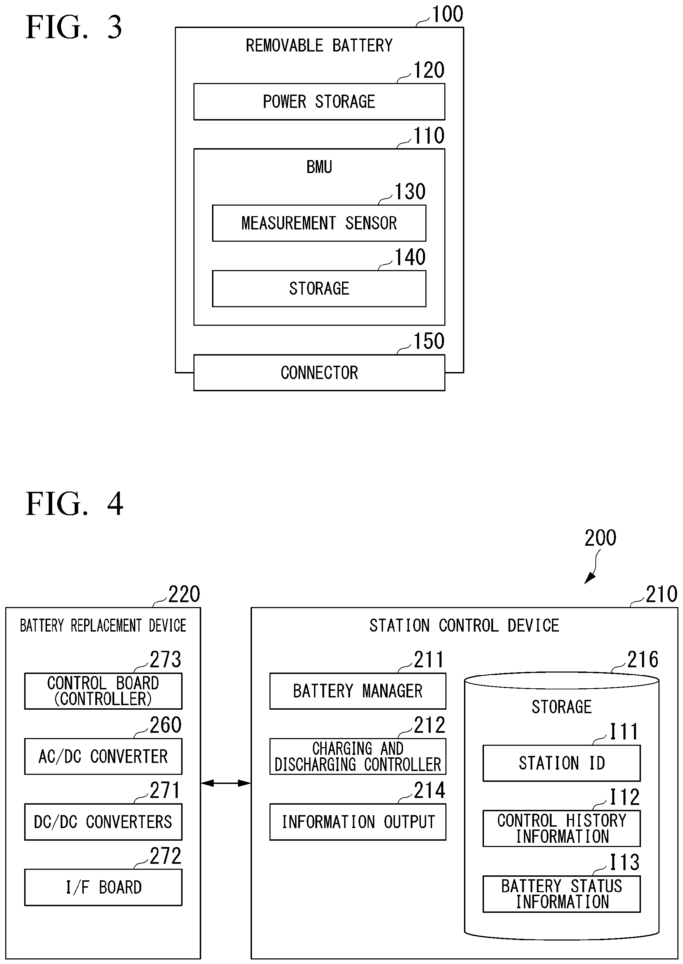

FIG. 3 is a diagram illustrating an example of a configuration of the removable battery 100 of the embodiment. The removable battery 100 includes, for example, a power storage 120, a BMU 110, and a connector 150. The BMU 110 includes, for example, a measurement sensor 130 and a storage 140.

The power storage 120 is, for example, a battery pack in which a plurality of single cells are connected in series. The single cells constituting the power storage 120 is a secondary battery that can be repeatedly charged and discharged, such as a lithium-ion battery (LIB), a nickel-hydrogen battery, or an all-solid-state battery. As the secondary battery constituting the power storage 120, for example, a capacitor such as an electric double layer capacitor, a composite battery that is a combination of a secondary battery and a capacitor, or the like can be considered, in addition to a lead acid battery, a sodium ion battery, or like. There is no particular limitation on a configuration of the secondary battery constituting the power storage 120.

The BMU 110 performs control of charging or discharging of the power storage 120, cell balancing, detection of abnormality in the power storage 120, derivation of cell temperature in the power storage 120, derivation of a charging or discharging current of the power storage 120, estimation of the SOC of the power storage 120, or like. The BMU 110 causes the storage 140 to store abnormality, failure, or like of the power storage 120 ascertained based on a measurement result from the measurement sensor 130 as the battery status information. The measurement sensor 130 is a voltage sensor, a current sensor, a temperature sensor, or like for measuring a charged state of the power storage 120. The measurement sensor 130 outputs the measurement result such as a measured voltage, current, and temperature to the BMU 110.

The storage 140 includes, for example, a nonvolatile storage device such as a flash memory. The storage 140 stores the above-described battery status information. The storage 140 may store identification information (battery ID) assigned to the removable battery 100. The connector 150 is electrically connected to the battery connector 12 of the electric vehicle 10 when the removable battery 100 is mounted on the electric vehicle 10. In this state, the removable battery 100 supplies electrical power stored in the power storage 120 to the electric motor included in the electric vehicle 10.

### [4. Battery replacement device]

FIG. 4 is a block diagram illustrating a system configuration of the battery replacement station 200. In the present embodiment, the station control device 210 includes, for example, a battery manager 211, a charging and discharging controller 212, an information output 214, and a storage 216.

The battery manager 211, the charging and discharging controller 212, and the information output 214 are each realized, for example, by a hardware processor such as a central processing unit (CPU) executing a program (software). Some or all of these components may be realized by hardware (circuit; including circuitry) such as a large scale integration (LSI), an application specific integrated circuit (ASIC), a field-programmable gate array (FPGA), or a graphics processing unit (GPU), or may be realized by collaboration between software and hardware. Some or all of functions of these components may be realized by a dedicated LSI. The program may be stored in advance in a storage device (a storage device including a non-transitory storage medium) such as a hard disk drive (HDD) or a flash memory included in the station control device 210, or may be stored in a removable storage medium (non-transitory storage medium) such as a DVD or CD-ROM and installed in the HDD or flash memory included in the station control device 210 when the storage medium is mounted on a drive device included in the station control device 210. The storage 216 is realized by one or a combination of storage devices such as an HDD, a flash memory, and a random access memory (RAM).

The battery manager 211 manages the plurality of removable batteries 100 accommodated in the plurality of battery slots 221. For example, the battery manager 211 manages reception of the removable battery 100 from the user of the electric vehicle 10, a determination as to whether charging or discharging of the removable battery 100 is necessary, and provision of the removable battery 100 of which the charging has been completed, to the user of the electric vehicle 10.

The charging and discharging controller 212 controls charging and discharging of the removable battery 100 of which the charging has been determined to be required by the battery manager 211. For example, the charging and discharging controller 212 controls an AC/DC converter 260 and a DC/DC converter 271 included in the battery replacement device 220 to perform charging and discharging of the removable battery 100. The charging and discharging controller 212 causes the storage 216 to store a history of control regarding the charging and discharging of the removable battery 100 as control history information 112. The history of the control regarding the charging and discharging of the removable battery 100 is an example of information on an operating state of the removable battery 100. The control history information I12 includes, for example, charging start time and charging end time of each removable battery 100, information in which the number of removable batteries 100 being simultaneously charged is associated with date and time information, and the like. Further, the control history information I12 may include a discharge start time and a discharge end time of the removable battery 100.

The information output 214 transmits status information of the battery replacement station 200 including the control history information I12 and battery status information 113 stored in the storage 216, to the management server device 300 at a predetermined cycle. The predetermined period is, for example, every 10 minutes, but is not limited to the above example. The status information is linked to a station IDI 11 stored in the storage 216 and transmitted to the management server device 300. The station IDI 11 is identification information that allows the battery replacement station 200 to be identified.

Further, in the present embodiment, the battery replacement device 220 includes a plurality of DC/DC converters 271, a plurality of interface boards (I/F boards) 272, and a control board 273, in addition to the AC/DC converter 260.

AC power from the external power supply PS is supplied to the AC/DC converter 260. The AC/DC converter 260 converts the AC power supplied from external power supply PS into DC power and supplies the converted DC power to the plurality of DC/DC converters 271.

The plurality of DC/DC converters 271 are provided in a one-to-one relationship with respect to the plurality of battery slots 221. The plurality of DC/DC converters 271 are electrically connected in parallel to the AC/DC converter 260. The DC/DC converter 271 is connected to the removable battery 100 accommodated in the battery slot 221. The DC/DC converter 271 converts the DC power supplied from the AC/DC converter 260 into DC power having a voltage suitable for the charging of the removable battery 100 and supplies the converted DC power to the removable battery 100.

The plurality of IF boards 272 are provided in a one-to-one relationship with respect to the plurality of battery slots 221. The IF board 272 is connected to the removable battery 100 accommodated in the battery slot 221. The IF board 272 performs communication with the removable battery 100 and acquires information (for example, battery status information or battery ID) stored in the storage 140 of the removable battery 100 from the removable battery 100. The IF board 272 outputs the information acquired from the removable battery 100 to the control board 273.

The control board (controller) 273 controls the AC/DC converter 260, the plurality of DC/DC converters 271, and the plurality of IF boards 272.

### [5. Management server device]

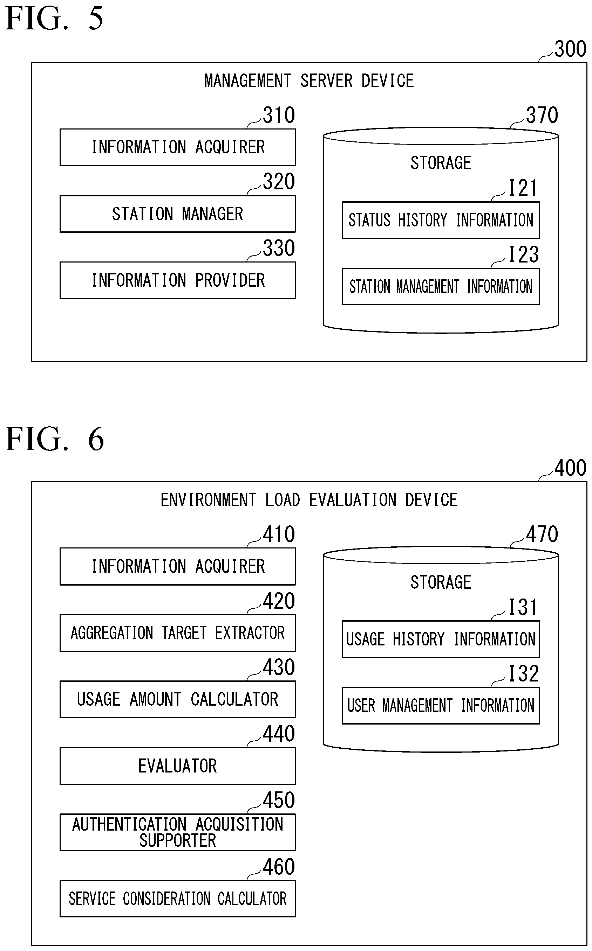

FIG. 5 is a block diagram illustrating a system configuration of the management server device 300. The management server device 300 includes, for example, an information acquirer 310, a station manager 320, an information provider 330, and a storage 370.

The information acquirer 310, the station manager 320, and the information provider 330 are each realized, for example, by a hardware processor such as a CPU executing a program (software). Some or all of these components may be realized by hardware (circuit; including circuitry) such as a LSI, an ASIC, an FPGA, or a GPU, or may be realized by collaboration between software and hardware. Some or all of functions of these components may be realized by a dedicated LSI. The program may be stored in advance in a storage device (a storage device including a non-transitory storage medium) such as a HDD or a flash memory included in the management server device 300, or may be stored in a removable storage medium (non-transitory storage medium) such as a DVD or CD-ROM and installed in the HDD or flash memory included in the management server device 300 when the storage medium is mounted on a drive device included in the management server device 300. The storage 370 is realized by one or a combination of storage devices such as an HDD, a flash memory, and a RAM.

The information acquirer 310 acquires the status information transmitted from each battery replacement station 200. For example, the information acquirer 310 acquires the control history information I12 and the battery status information I13 transmitted from each battery replacement station 200. In the present specification, "acquire" refers to acquisition through internal generation (for example, generation through a predetermined calculation for information received from the outside), in addition to acquisition through reception from the outside. The information acquirer 310 stores the status information acquired from each battery replacement station 200 in the storage 370 as the status history information 121.

The station manager 320 performs management of each battery replacement station 200 based on the status information acquired from each battery replacement station 200. For example, the station manager 320 manages an operating status of each battery replacement station 200, the number of removable batteries 100 received by each battery replacement station 200, the number of removable batteries 100 provided from each battery replacement station 200, or like.

The information provider 330 provides the status history information I21 to the environment load evaluation device 400 in response to a request from the environment load evaluation device 400. Further, the information provider 330 may generate usage history information I31 based on the status history information 121 in response to a request from the environment load evaluation device 400 and provide the generated usage history information 131 to the environment load evaluation device 400.

The storage 370 stores status history information 121 and station management information 123. The station management information 123 is management information including a station ID or installation location of each battery replacement station 200.

### [6. Environment load evaluation service provision device]

FIG. 6 is a block diagram illustrating a system configuration of the environment load evaluation device 400. The environment load evaluation device 400 includes, for example, an information acquirer 410, an aggregation target extractor 420, a usage amount calculator 430, an evaluator 440, an authentication acquisition supporter 450, a service consideration calculator 460, and a storage 470.

The information acquirer 410, the aggregation target extractor 420, the usage amount calculator 430, the evaluator 440, the authentication acquisition supporter 450, and the service consideration calculator 460 are each realized, for example, by a hardware processor such as a CPU executing a program (software). Some or all of these components may be realized by hardware (circuit; including circuitry) such as a LSI, an ASIC, an FPGA, or a GPU, or may be realized by collaboration between software and hardware. Some or all of functions of these components may be realized by a dedicated LSI. The program may be stored in advance in a storage device (a storage device including a non-transitory storage medium) such as a HDD or a flash memory included in the environment load evaluation device 400, or may be stored in a removable storage medium (non-transitory storage medium) such as a DVD or CD-ROM and installed in the HDD or flash memory included in the environment load evaluation device 400 when the storage medium is mounted on a drive device included in the environment load evaluation device 400. The storage 470 is realized by one or a combination of storage devices such as an HDD, a flash memory, and a RAM.

The information acquirer 410 acquires a usage history of the removable battery 100. For example, the information acquirer 410 acquires the status history information 121 from the management server device 300 and acquires the usage history of the removable battery 100 for each user based on the acquired status history information 121. The information acquirer 410 records the usage history information I31 indicating the acquired usage history for each user in the storage 470.

The aggregation target extractor 420 extracts a user group (hereinafter referred to as a "target user group") consisting of two or more users as aggregation targets from among the users who can use the battery replacement station 200. In this extraction processing, the target user group may be extracted using any criterion. For example, the target user group may be a user group consisting of users who have been already registered as users of the environment load evaluation service among users of the battery sharing service. Further, for example, the target user group may be a user group in which the usage history of the removable battery 100 satisfies a predetermined condition. Further, for example, the target users may be extracted based on a type of the electric vehicle 10 that is driven using the removable battery 100.

The usage amount calculator 430 calculates a usage amount of the removable battery 100 used by the target user group during a predetermined period. For example, the usage amount calculator 430 can calculate the usage amount by integrating a discharging amount of the removable battery 100 during the predetermined period, which is recognized based on the usage history information 131. In addition, for example, the usage amount calculator 430 can calculate the usage amount by integrating the charging amount of the removable battery 100 during the predetermined period, which is recognized based on the usage history information 131.

The evaluator 440 evaluates the degree of contribution to the reduction in the CO2 emission amount for the target user group that is an evaluation target, based on the usage amount of the removable battery 100 for each target user group. Specifically, the evaluator 440 calculates the amount of reduction in the CO2 emission amount as the evaluation value of the degree of contribution based on the usage amount of the removable battery 100 by the target user group that is an evaluation target.

The authentication acquisition supporter 450 supports various activities of the target user group necessary to receive approval for various authentications related to the reduction in the CO2 emission amount. For example, Eco Mark and Ethical Mark are examples of the various authentications described here. Specifically, the authentication acquisition supporter 450 executes processing for implementing some or all of the activities necessary to receive the approval of various authentications related to the reduction in the CO2 emission amount on behalf of the target user group. For example, the authentication acquisition supporter 450 may apply for the approval of the authentications to an authentication authority on behalf of the target user group or execute processing for presenting a reduction performance of the target user group to the authentication authority. Further, the authentication acquisition supporter 450 can acquire a degree of progress of a process related to the acquisition of the authentication by accessing a predetermined database for acquisition of the authentication. The predetermined database may be a database that holds information regarding the degree of progress, and may be, for example, a database of the authentication authority.

The service consideration calculator 460 calculates a fee to be received from the administrator of the target user group, for provision of an environment load evaluation result or according to the content of the evaluation result. More specifically, the service consideration calculator 460 calculates a consideration related to the target user group for the environment load evaluation service (hereinafter referred to as "service consideration"), based on the usage amount of the removable battery 100, the degree of contribution to reduction in the CO2 emission amount, a support situation of an authentication acquisition activity, or like. The service consideration may be something paid to a service provider by the target user group or may be something paid to the target user group by the service provider.

The storage 470 stores the usage history information I31 and the user management information I32. The user management information I32 is management information of the user of the battery sharing service. The user management information 132 includes information for recognizing the target user group as the aggregation target with respect to the amount of usage of the removable battery 100 in the environment load evaluation service, in addition to the identification information of each user.

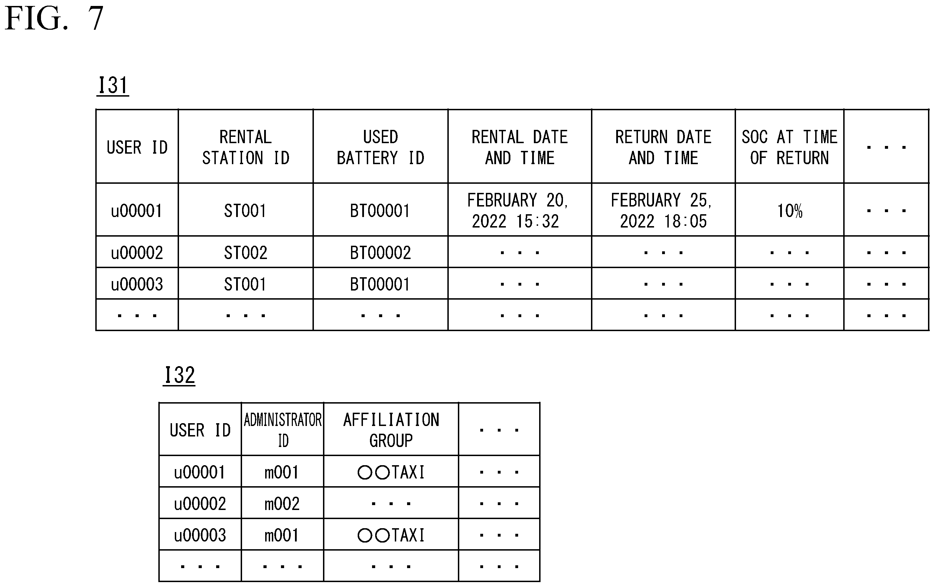

FIG. 7 is a diagram illustrating an example of the usage history information 131 and the user management information 132. The usage history information I31 is stored in the storage 470 as information in which, for example, a user ID is associated with a rental station ID, a used battery ID, a rental date and time, a return date and time, and a SOC at the time of the return. The rental station ID is identification information of the battery replacement station 200 that has lent the removable battery 100 to the user. Further, the used battery ID is identification information of the removable battery 100 lent to the user. It is possible to obtain a cumulative value of the usage amount of the removable battery 100 in a predetermined period for the user by managing such usage history information I31.

Further, the user management information 132 is stored in the storage 470 as information in which an administrator ID and an affiliation group are associated with the user ID, for example. The administrator ID is identification information of the administrator of the group to which the user belongs (affiliation group). For example, the affiliation group is a group of target users, and may be an organization such as a company to which each user belongs, and the administrator may be a representative of the organization such as a company. It is possible to obtain the cumulative value of the usage amount of the removable battery 100 of each user for each administrator or affiliation group of the user by managing such user management information I32. This means that the usage amount of the removable battery 100 can be obtained for each target user group.

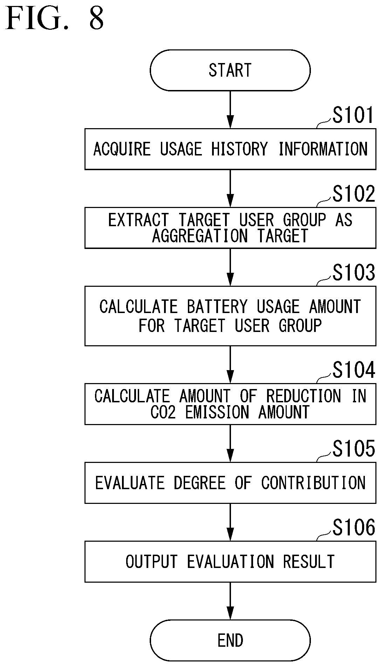

FIG. 8 is a flowchart showing an example of a flow of processing in which the environment load evaluation device 400 evaluates the degree of contribution of the target user group to the reduction in the CO2 emission amount. First, in the environment load evaluation device 400, the information acquirer 410 acquires the usage history information 131 and records the usage history information 131 in the storage 470 (step S101). For example, the information acquirer 410 may acquire the status history information I21 from the management server device 300 to generate the usage history information 131 based on the acquired status history information 121. Further, for example, when the management server device 300 has a function of generating the usage history information 131, the information acquirer 410 requests the management server device 300 to provide the usage history information 131 regarding each user in the target user group.

Next, the aggregation target extractor 420 extracts the target user group as the aggregation target from among the users who can use the battery replacement station 200, based on the usage history information 131 acquired in step S101 (step S102).

Subsequently, the usage amount calculator 430 calculates the usage amount of the removable battery 100 in a predetermined period based on the usage history information 131 of each user in the target user group, for the target user group extracted in step S102 (step S103).

Subsequently, the evaluator 440 calculates the amount of reduction in the CO2 emission amount based on the usage amount of the removable battery 100 by the target user group (step S104). For example, the evaluator 440 may calculate a first emission amount, which is an amount of CO2 emitted when power of a usage amount of the removable battery 100 is generated using fossil fuel, as the reduction amount. Further, for example, the evaluator 440 may calculate a second emission amount, which is an amount of CO2 emitted when the electric vehicle 10 driven by the removable battery 100 is driven by an internal combustion engine and calculate a difference between the first emission amount and the second emission amount as the reduction amount. In general, driving by electrical power has a smaller CO2 emission amount than driving by the internal combustion engine. Therefore, it is generally assumed that the first emission amount is smaller than the second emission amount. In this case, the evaluator 440 may further recognize a type (for example, a type such as a motorcycle, car, and bicycle) of equipment that the target user group drives using the removable battery 100 and calculate the amount of CO2 emitted when the target equipment is driven by an internal combustion engine according to the type, as the second emission amount.

A relationship between the CO2 emission amount and a power generation amount may differ depending on a type of fossil fuel to be combusted or a power generation scheme. Further, an amount of the fossil fuel used for power generation may differ depending on energy demand or energy balance (balance of nuclear power, thermal power, and various renewable energies) of a country or region. Therefore, the evaluator 440 may calculate the CO2 reduction amount in consideration of such energy supply and demand characteristics (an energy demand amount, energy balance, a power generation scheme, or like) for each country or region. In this case, it is assumed that information indicating the energy supply and demand characteristics has been stored in the storage 470 in advance.

The evaluator 440 evaluates the degree of contribution of the target user group to the reduction in the CO2 emission amount based on the calculated reduction amount (step S 105). The evaluator 440 outputs evaluation result for the degree of contribution for the target user group (step S106). The aspect of output may be a display of an image (including a video) indicating the evaluation result, may be an output of audio indicating the evaluation result, may be transmission of information indicating the evaluation result to another device, or may be an output of the information indicating the evaluation result to a storage device. When there are a plurality of target user groups, the evaluator 440 may output information indicating the evaluation result in an aspect in which degrees of contribution of the plurality of target user groups can be compared. Here, it is assumed that the evaluator 440 records the information on the evaluation result in the storage 470, for processing for determining the service consideration, which will be described later.

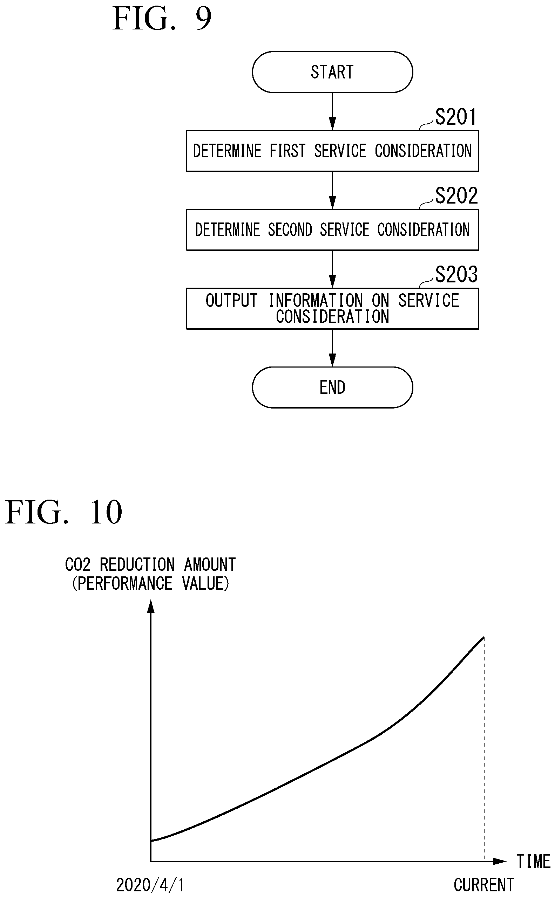

FIG. 9 is a flowchart illustrating an example of a flow of processing in which the environment load evaluation device 400 determines a service consideration for the target user group. Here, a case where the first service consideration and the second service consideration are determined will be described. Details of the first service consideration and the second service consideration will be described in a processing flow to be described later. Here, for the sake of simplicity, a case where the first service consideration and the second service consideration are determined in a series of processing flows, but this is an example, and the first service consideration and the second service consideration do not necessarily need to be determined in the series of processing flows. The first service consideration and the second service consideration may be determined by separate processing flows. Further, both the first service consideration and the second service consideration do not necessarily need to be determined, and the service consideration to be determined may differ for each target user group.

First, the service consideration calculator 460 determines the first service consideration based on an aggregation result for each target user group (step S201). Here, the first service consideration is a service consideration for a provider (an example of an administrator or an affiliation group) that provides a mobile service using the electric vehicle 10 by using the battery sharing service. In this case, it can be said that a provider of the mobile service is a primary user of the battery sharing service, and an employee of the operator is a secondary user of the battery sharing service. In this case, the administrator and the employee (managed as individual users by a user ID) are associated with each other using the user management information I32 illustrated in FIG. 7.

More specifically, the service consideration calculator 460 calculates the service consideration using, as a calculation unit, a unit traveling distance of the electric vehicle 10 or a CO2 unit emission amount that can be reduced by the electric vehicle 10 compared to a vehicle driven by an internal combustion engine (a vehicle in which the same traveling conditions are assumed except for a power source). For example, when the unit traveling distance of the electric vehicle 10 is 1 km and the service consideration per 1 km is 1 point, the service consideration when the target user group causes the electric vehicle 10 to travel 100 km is 100 points.

Further, for example, assuming that the electric vehicle 10 can reduce the CO2 emission amount by 1 [mg] per unit traveling distance of 1 km compared to a vehicle using an internal combustion engine, when the reduction amount is set to a service consideration, a service consideration when the administrator causes the electric vehicle 10 to travel 100 km is 100 points.

Since such service considerations increase depending on the usage amount of the electric vehicle 10, the service considerations are proportional to the amount of reduction in CO2 emission amount reduced due to the usage of the electric vehicle 10. Therefore, the first service consideration may be applied as an incentive (an example of the consideration) to the administrator who has contributed to the reduction in the CO2 emission amount. Further, the first service consideration may be applied as a usage fee (an example of the consideration) that the administrator who has received the evaluation of the degree of contribution should pay to a provider of the environment load evaluation service that has provided the evaluation result.

Subsequently, the service consideration calculator 460 determines the second service consideration based on a situation of authentication acquisition support of the authentication acquisition supporter 450 (step S202). Here, the second service consideration is a service consideration for a provider who provides a mobile service using the electric vehicle 10 by using the battery sharing service, like the first service consideration. More specifically, the service consideration calculator 460 determines the second service consideration depending on a situation of an application for authentication acquisition to the authentication authority that the authentication acquisition supporter 450 has made on behalf of the provider (administrator). Here, the situation of the application for authentication acquisition may include any process from application implementation to the approval of the authentication. The situation of the application for authentication acquisition is an example of a "degree of progress." Here, the situation of the application for authentication acquisition can be recognized, for example, by accessing the database of the authentication authority.

For example, when the situation of the application for authentication acquisition includes first to fifth processes, a total service consideration assigned when all the processes have completed is 100 points, and a current situation of the application is pending in the third step, the service consideration calculator 460 may assign 40 points that is 2/5 of the total 100 points when two of the five processes including the first to fifth processes have been completed at that stage, as the service consideration. Further, for example, when there is a difference in load (a degree of difficulty, required man-hours, or like) between the first to fifth processes, the service consideration calculator 460 may calculate points distributed proportionally depending on the load as the service consideration. For example, in the example, when the loads of the first to fifth processes are 1:2:3:2:2, the service consideration calculator 460 may calculate (1 + 2)/(1 + 2 + 3 + 2 + 2)×100 = 30 points as the service consideration.

Such a service consideration increases depending on a progress situation of support activity for authentication acquisition. Therefore, the second service consideration may be applied as a consideration for a performance that a provider providing the environment load evaluation service has achieved in an activity of supporting authentication acquisition of the provider of the mobile service. That is, the second service consideration may be applied as a service usage fee (an example of the consideration) that the provider providing the environment load evaluation service charges to the provider of the mobile service.

The service consideration calculator 460 outputs information on the first service consideration and the second service consideration calculated in this way (step S203). For example, the service consideration calculator 460 may record a value of the calculated service consideration in association with the identification information of the administrator or may notify the provider of the mobile service (administrator) of the value.

FIG. 10 is a diagram illustrating a first display example of the degree of contribution of the administrator (or an evaluation result) to the reduction in the CO2 emission amount. For example, the evaluator 440 can provide the administrator with information obtained by visualizing the degree of contribution of the administrator to the CO2 emission amount reduction (or the evaluation result therefor). For example, the display example in FIG. 10 is an example in which the CO2 emission amount that can be reduced by using the electric vehicle 10 driven by the removable battery 100 is displayed. In this case, the evaluator 440 can provide information obtained by visualizing the CO2 emission amount that can be reduced compared to a case where fossil fuel is used as a power source as a performance value.

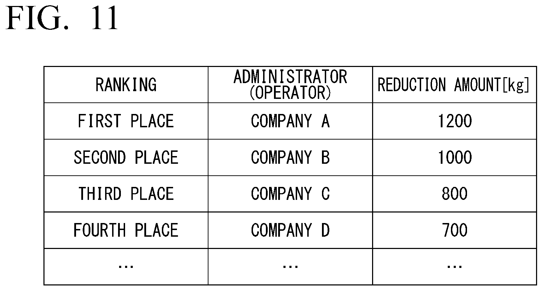

FIG. 11 is a diagram illustrating a second display example of the degree of contribution of the administrator to the CO2 emission amount reduction (or an evaluation result thereof). For example, the evaluator 440 can provide the administrator with information obtained by visualizing the degree of contribution of the administrator to the CO2 emission amount reduction (or the evaluation result) in a ranking format different from that shown in FIG. 10. For example, the display example in FIG. 11 is an example in which a result of ranking a plurality of administrators, based on the performance value of the CO2 emission amount reduction of each administrator is shown. The administrators as ranking targets may be classified based on a type of mobile service to be provided, or the like. Thus, visualization information in the ranking format regarding the performance of the CO2 emission amount reduction is provided, for example, thereby making it possible for the administrator to relatively recognize whether his or her company's efforts to reduce CO2 emission amount is sufficient as compared to those of other companies in the same industry.

Further, when the visualization information as shown in FIGS. 10 or 11 is provided to make it possible for the administrator to easily appeal to the outside an evaluation result of a degree of contribution of his or her company to the CO2 emission reduction. Furthermore, when such appeal of the evaluation result is easily performed, the administrator can promote an activity for improving a social image of the company.

According to the battery sharing service system 1 of the embodiment described above, in the battery sharing service system 1 that manages the plurality of removable batteries 100 that can be replaced via the battery replacement station 200 so that the removable batteries 100 can be shared among a plurality of users, the environment load evaluation device 400 extracts the target user group consisting of two or more users as aggregation targets from among the users who can use the battery replacement station 200, calculates the total usage amount (charging amount or discharge amount) of the removable battery 100 used by the target user group during a predetermined period based on the usage history of the removable battery 100 of the target user group, and evaluates the environment load related to the usage of the removable battery 100 based on the total usage amount, thereby appropriately evaluating the degree of contribution to the CO2 reduction for the target user group of the battery sharing service.

The embodiment described above can be expressed as follows.

An environment load evaluation device including
a storage medium that stores computer-readable instructions, and
a processor connected to the storage medium,
the processor executing the computer-readable instructions to execute:
   evaluation processing for evaluating an environment load related to usage of batteries for a battery sharing system for managing a plurality of the batteries replaceable via a battery replacement station so that the batteries can be shared among a plurality of users, the evaluation processing including
   extracting a target user group consisting of two or more users as aggregation targets from among users capable of using the battery replacement station;
   calculating a total usage amount of the battery used by the target user group during a predetermined period, based on a usage history of the battery of the target user group; and
   evaluating an environment load related to the usage of the battery based on the total usage amount.

### <Modification Example>

In the embodiment, a case where the battery replacement station 200 connected to a commercial power supply is assumed, and an environment load is evaluated for charging of the removable battery 100 using the battery replacement station 200 has been described. However, when there is also the battery replacement stations 200 connected to renewable energy, it is more preferable to distinguish between origins of electrical power used at the time of charging and evaluate the environment load. In this case, for example, the management server device 300 may be configured to manage a battery ID of the removable battery 100 used by the user, identification information of the user, and a station ID of the battery replacement station 200 that has charged the removable battery 100 in association with each other, and perform evaluation of an environment load according to an origin of electrical power used for charging, by referring to a charging history of the removable battery 100 used by each user in the target user group. In this case, since it is necessary to calculate the CO2 emission amount according to the origin of the electrical power, it is assumed that the management server device 300 stores information such as a unit emission amount of CO2 emitted at the time of power generation or a calculation formula for CO2 emission amount, for each origin of the electrical power, in advance. Further, in this case, it is assumed that the management server device 300 stores, in advance, information on whether the battery replacement station 200 is connected to a power supply that supplies electrical power from a certain source.

In the embodiment, a case where the environment load evaluation device 400 extracts the target user group consisting of the two or more users as aggregation targets from among the users who can use the battery replacement station 200 and evaluates the degree of contribution to the reduction in the environment load for the extracted target user group or determines the service consideration has been described. Instead of this, the environment load evaluation device 400 may be configured to perform the evaluation of the degree of contribution or the determination of the service consideration for each user as an evaluation target (hereinafter referred to as a "target user") instead of the target user group. In this case, the environment load evaluation device 400 can change a usage history aggregation range described in the embodiment from a range of the target user group to a range of individual users to perform the evaluation of the degree of contribution for each target user or the determination of the service consideration.

Although the mode for implementing the present invention has been described above using embodiments, the present invention is not limited to the embodiments in any way, and various modifications and substitutions can be made without departing from the gist of the present invention.

### [Reference Signs List]

1 Battery sharing service system
10 Electric vehicle
12 Battery connector
14 Vehicle controller
16 Traveling drive force output device
18 Vehicle sensor
20 HMI
22 GNSS receiver
100 Removable battery
110 BMU
120 Power storage
130 Measurement sensor
140 Storage
150 Connecter
200 Battery replacement station
210 Station control device
211 Battery manager
212 Charging and discharging controller
214 Information output
216 Storage
220 Battery replacement device
221 Battery slot
260 AD/DC converter
271 DC/DC converter
272 Interface board (I/F board)
273 Control board (controller)
300 Management server device
310 Information acquirer
320 Station manager
330 Information provider
370 Storage
400 Environment load evaluation service providing device
410 Information acquirer
420 Aggregation target extractor
430 Usage amount calculator
440 Evaluator
450 Authentication acquisition supporter
460 Service consideration calculator
470 Storage

## Claims

1. An environment load evaluation device for evaluating an environment load related to usage of batteries for a battery sharing system for managing a plurality of batteries replaceable via a battery replacement station so that the plurality of batteries can be shared among a plurality of users, the environment load evaluation device comprising:
an aggregation target extractor configured to extract a target user group consisting of two or more users as aggregation targets from among users capable of using the battery replacement station;
a usage amount calculator configured to calculate a total usage amount of the batteries used by the target user group during a predetermined period, based on a usage history of the batteries of the target user group; and
an evaluator configured to evaluate an environment load related to the usage of batteries based on the total usage amount.

2. The environment load evaluation device according to claim 1, wherein the evaluator acquires a first emission amount, the first emission amount being an amount of CO2 emitted when the total usage amount of used electrical power is generated using fossil fuels, as an evaluation value of the environment load.

3. The environment load evaluation device according to claim 2, wherein the evaluator calculates a second emission amount, the second emission amount being an amount of CO2 emitted when equipment driven by the batteries are driven by an internal combustion engine and acquires a difference between the first emission amount and the second emission amount as the evaluation value of the environment load.

4. The environment load evaluation device according to claim 3, wherein the evaluator recognizes a type of equipment driven using the batteries by the target user group and calculates an amount of CO2 emitted when the equipment is driven by an internal combustion engine according to the type as the second emission amount.

5. The environment load evaluation device according to any one of claims 1 to 4, wherein the evaluator evaluates the environment load for each of the target user groups and displays evaluation results of a plurality of the target user groups in a manner that the evaluation results can be compared.

6. The environment load evaluation device according to claim 5, wherein the evaluator recognizes a type of equipment driven using the battery by the target user group and performs evaluation of the environment load for a target user group having the same type of the equipment.

7. The environment load evaluation device according to any one of claims 1 to 6, wherein
the evaluator provides an evaluation results of an evaluation of the environment load performed for each of the target user groups to an administrator of the target user group, and
the environment load evaluation device further comprises a consideration calculator configured to calculate a consideration to be received from the administrator of the target user group with respect to provision of the evaluation result or depending on content of the evaluation result.

8. The environment load evaluation device according to claim 7, wherein
equipment driven using the battery by the users is an electric vehicle using a motor as a power source, and
the consideration calculator calculates the consideration using a unit traveling distance of the electric vehicle or a unit emission amount of CO2 that the electric vehicle can reduce compared to a vehicle driven by an internal combustion engine as a calculation unit.

9. The environment load evaluation device according to any one of claims 1 to 8, further comprising:
an authentication acquisition supporter configured to acquire a degree of progress of a process related to acquisition of authentication by accessing a predetermined database for acquisition of authentication related to reduction of the environment load, wherein
the consideration calculator calculates the consideration according to the degree of progress of the process related to acquisition of the authentication.

10. An environment load evaluation method for evaluating, by a computer, an environment load related to usage of batteries for a battery sharing system for managing a plurality of the batteries replaceable via a battery replacement station so that the plurality of batteries can be shared among a plurality of users, the environment load evaluation method comprising:
extracting a target user group consisting of two or more users as aggregation targets from among users capable of using the battery replacement station;
calculating a total usage amount of the batteries used by the target user group during a predetermined period, based on a usage history of the batteries of the target user group; and
evaluating an environment load related to the usage of batteries based on the total usage amount.

11. A program for causing a computer for evaluating an environment load related to usage of batteries for a battery sharing system for managing a plurality of the batteries replaceable via a battery replacement station so that the plurality of batteries can be shared among a plurality of users, to:
extract a target user group consisting of two or more users as aggregation targets from among users capable of using the battery replacement station;
calculate a total usage amount of the battery used by the target user group during a predetermined period, based on a usage history of the batteries of the target user group; and
evaluate an environment load related to the usage of batteries based on the total usage amount.

12. An environment load evaluation device for evaluating an environment load related to usage of batteries for a battery sharing system for managing a plurality of the batteries replaceable via a battery replacement station so that the plurality of batteries can be shared among a plurality of users, the environment load evaluation device comprising:
an aggregation target extractor configured to extract one or more target users as aggregation targets from among users capable of using the battery replacement station;
a usage amount calculator configured to calculate a usage amount of the battery used by the target user during a predetermined period, based on a usage history of the batteries of the target user; and
an evaluator configured to evaluate an environment load related to the usage of batteries based on the usage amount.
